# EUROPEAN PATENT SPECIFICATION

(11) **EP 1 429 511 B1**
(45) Date of publication and mention of the grant of the patent: **11.04.2007**
(21) Application number: 02080167.6
(22) Date of filing: 10.12.2002
(51) Int. Cl.: H04L 29/06, H04Q 7/24, H04Q 7/22

(54) **Telecommunication system and method for transmitting video data between a mobile terminal and Internet**
Telekommunikationssystem und Verfahren zur Übertragung von Videodaten zwischen einem Mobiltelefon und Internet
Système de télécommunication et procédé pour la transmission de signaux vidéo entre un terminal mobile et Internet

(43) Date of publication of application: 16.06.2004
(73) Proprietor: Nokia Corporation, 02150 Espoo (FI)
(72) Inventor: Bais, Michel Alexander, 1601 BB Enkhuizen (NL); Schramp, Rudi, 2497 CD The Hague (NL); Klok, Frederik Harm, 2645 GZ Delfgauw (NL); Selgert, Franklin, 2651 BL Berkel En Rodenrijs (NL)
(74) Representative: Schippan, Ralph

(56) References cited:
- EP-A- 1 001 581
- US-A- 5 961 589
- US-A1- 2002 024 943
- US-A1- 2002 024 945
- US-A1- 2002 093 531

## Description

### Field of the Invention

The invention refers to a system and a method for transmitting streaming video content from mobile terminals to a streaming video server within the internet. The invention refers also to a gateway to be used for the transmission of streaming video content to mobile terminals.

### Background of the Invention

The sales of digital camera's and handy cams are growing rapidly. The use of these cameras for near real time records of events during holidays, business trips etc. stay at the level of sending pictures or short video clips via email. In the home situation people already use so called WEB cams to show e.g. themselves on the Internet. The introduction of wideband Internet access via cable and ADSL makes these services even more popular.

US 2002/0024945 A1 (Civanlar et al.) discloses a method and apparatus for establishing a communication session between first and second terminals in communication over a plurality of networks that employ different transmission standards, wherein the Plurality of networks are selected from among a circuit switched network, a connection-less packet switched network and a connection-oriented packet switched network.

### Summary of the Invention

The invention presents a telecommunication system which is fit for transmission of streaming video signals from mobile terminals to an internet streaming server, making use of a gateway, connected to the circuit switched network at the one side and connected to the internet at the other side, said gateway being fit for the conversion of streaming video bit streams in a format fit to be received from the mobile terminals via the circuit switched network, into files having an internet compatible streaming video format. As nowadays there are no standard protocols to have such a conversion gateway communicate with mobile terminals, as a preferred option use may be made of a standardized protocol for videoconferencing between mobile terminals. It is noted that such videoconferencing protocols have been developed for use in architectures wherein two or more users, having videoconferencing enabled mobile phones, may videoconferencing with each other.

To be able to use such a "videoconferencing protocol" for uploading streaming video content to an internet server or client, the mobile terminals and the gateway at said one side preferably are fit for exchanging video bit streams complying a protocol for phone-to-phone videoconferencing. The ITU H.324M videoconferencing protocol may be very fit for the intended purpose.

One aspect of the invention is thus to use a protocol which is standardized for a different technical field, viz. for phone-to-phone videoconferencing, for enabling uploading streaming video content originated by mobile terminals to the internet.

A second aspect of the invention addresses the management of video content storage. To be able to manage storage targets of the converted streaming files, the system comprises a registration server, which is connected with said mobile terminals, e.g. via said packet switched network, and fit for registering, for each relevant mobile terminal, a terminal identifier and linking that identifier to the address of an internet storage location wherein the internet compatible streaming video, originated by the relevant mobile terminal, is or is to be stored. To enable the use of such a registration server, the system preferably comprises means for detecting, via the circuit switched network, the relevant terminal's identifier (e.g. its calling line identifier, CLI), as well as means for retrieving at the registration server, guided by that detected terminal identifier, the address of the internet storage location in which the internet compatible streaming video, originated by the relevant mobile terminal, is to be stored, and for forwarding said internet compatible streaming video to that internet storage location address.

Preferably, said means for detecting the relevant terminal identifier and said means for retrieving at the registration server the address of the internet storage location and for forwarding said internet compatible streaming video to that internet storage location address are located within the conversion gateway. As an alternative, said detection means, retrieval means and forwarding means may be located in the registration server; in that case the gateway's output -including the terminal identifier- will be transmitted to the registration server which subsequently distributes the converted content to the relevant storage location, guided by the terminal identifier pointing to the relevant storage address. A different option is to have said detection means, retrieval means and forwarding means be located in any other server or have those means be distributed over different servers.

With the proposed architecture in combination with e.g. H.324M videoconferencing protocol enabled phones it is possible to execute "live" broadcast of planned and unplanned events like parties, car accidents etc. from each of such mobile phone to internet servers and clients (e.g. PCs or other mobile phones) using -except the conversion gateway and the preferred registration server- standard components.

The telecommunication system may comprise means for transmitting a message to the terminal which originates or originated the streaming video content, comprising a link to the storage location of said content.

Those means may also be enabled for transmitting a similar message to one or more other user terminals different from the originating user terminal, comprising a link to the storage location of said content and/or at least part of said streaming video content itself. The relevant messages to the originating terminal and/or the other (non-originating) terminals may be sent as e.g. e-mail messages, "SMS" messages or (e.g. MSN or ICQ based) "Instant Messaging" messages.

### Brief Description of the Drawings

Figure 1 shows the architecture of a preferred embodiment of the invention.
Figure 2 shows an exemplary implementation of the H.324M Gateway.

### Detailed Description of the Drawings

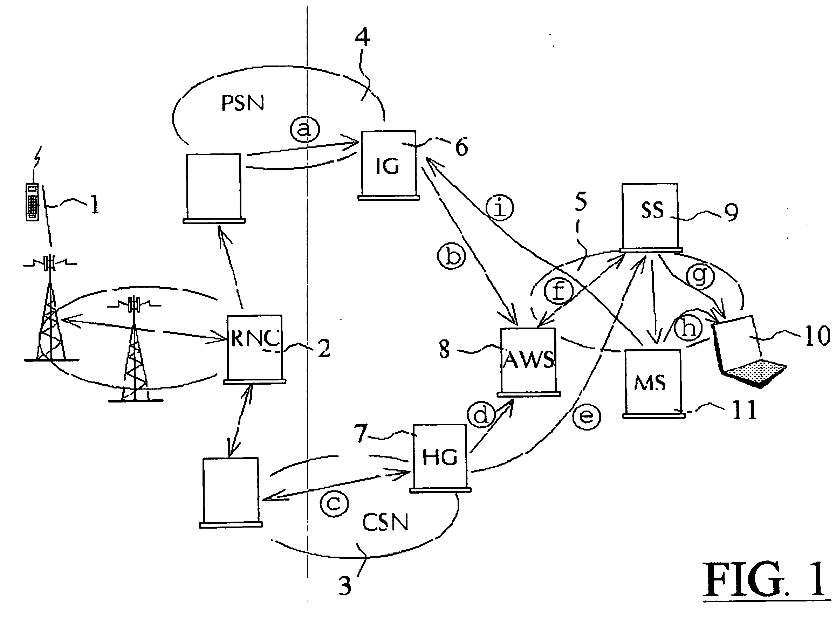

In figure 1 terminals 1 are connectable, via base stations and a "Radio network Controller" (RNC) 2, with a Circuit Switched Network (CSN) 3 and a Packet Switched Network (PSN) 4. Via the PSN 4 the terminals 1 can browse the internet (IP) 5, viz. via an Internet Gateway (IG) 6 (a). Terminal users may subscribe, via the PSN 4, at an Authentication WEB Server 8 (AWS), for a "Mobile WEB cam Streaming and Mailing Service" (b), enabling authorized users to stream video content to an IP Streaming Server (SS) 9 (f). Part of the subscription process at the Authentication WEB Server 8 may be the user's phone number and mail address.

During subscription, the user gets assigned a location address in a (not explicitly shown) database at the Streaming Server 9, which may be communicated to the user by email or SMS. The storage location contains the user's stream files if the user is "mobile web camming". The address of this location is saved in a (not explicitly shown) database at the AWS 8; the location address is linked to the user's phone number.

If an interesting event occurs, a user may dial (c), via the terminal 1, the number of an H.324 Gateway 7, after which the user is able to stream the event "live" to the Internet and store it e.g. on Streaming Server 9 (e). Before the streaming starts via the Streaming Server 9, the H.324 Gateway 7 checks the user's Calling Line Identifier (CLI) -the user's phone number- at the Authentication Server 8 and retrieves, guided by the user's CLI, the user's storage location for the up-streamed content (d). Via the Internet 5, PC-users 10 can view the up-streamed content via a PC streaming client (g), both live or after being stored for some time at the relevant storage location, from the Streaming Server 9.

At the beginning, during or after the video recording session, the user may receive, by means of a Message Server (MS) 11, an email or SMS message on the user's phone 1 or a message via "Instant Messaging (IM) on a user's PC 10 -via the IP Gateway 6 and the PSN 4- and/or the user's PC 10, comprising a link to the location of the stored content (h, i). Besides sending a message to the user's phone, to inform the user about the relevant storage address, it is preferred to enable an option of notifying, besides the user himself/herself, other phone and/or PC users when recording of streaming video begins or when it has ended. For instance users may draw their friends' attention to the user's most recent video, recorded via the user's mobile terminal. The notification may be send to those friends, using the Message Server 11, at the beginning of the streaming video session, during that session or after the session. As an extra option the streaming video file or part of (like an introducing video "trailer") may be incorporated in or attached to the message.

A call from a mobile terminal 1 to the H.324 Gateway 7 may be routed via a switched 64 Kbit channel. The H.324M Gateway 7 may be connected with the Circuit Switched Network 3 via an off-the-shelf ISDN connection. Because of this simple connection model it may be possible to connect to the H.324 Gateway from other UMTS networks.

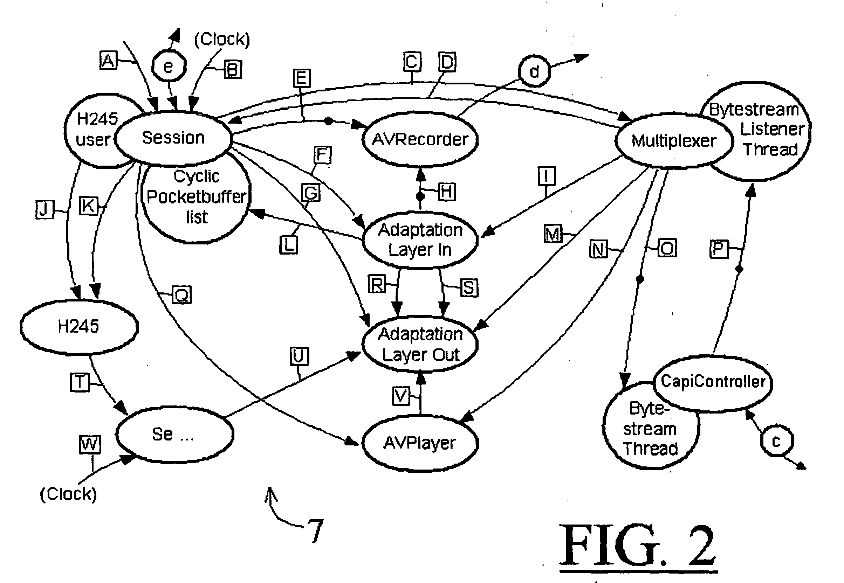

Finally, an exemplary software implementation of the H.324M Gateway will be described and shown in figure 2. Figure 2 contains following labels:
- A: StartThread
- B: Initiate
- C: Set/CtearMuxEntrytn
Set/ClearMuxEntryOut
SetMuxPriorities
HangUpCall
- D: CallHungUp
- E: SetWriteAudio
SetWriteVideo
- F: SetSDU
lnitCPBufferListener
Open.../Close...
- G: Open.../Close...
SetLogicalParamOut
IsChannelOpen
EncodeAndSendLayer1SDU
- H: WriteAudio
WriteVideo
- I: RxDataToAISDU
RxDataToAIPDU
- J: DoSend
GetAlOut
- K: DispatchASN1Message
- L: BufferNotEmpty
- M: GetSDU
GetLayerType
GetCurrentSDUSize
IsChannelOpen/Segmentable
- N: TimerPlayerEvent
- O: SendData
- P: DataReceived
DataRequested
HungUp
- Q: IntraStart/StopPlayer
DetermineVideoRate
SetCapabilities
- R: (Control)
ResetSRP
PutPDU
- S: (Video)
Retransmit
PutPDU
- T: DoRecord
- U: EncodeAndSendLayer1SDU
- V: SendLayer2SDU
SendLayer3SDU
- W: H245-timer

### H.324M Software discription

### CODING PRINCIPLES

Some principles that we used (on many places, though not everywhere):
- one class is in one .h file plus one .cpp file, with the same filename as the class.
- parameters start with an f, global variables with g, real constants with c. Local variables can start with I. Attributes (class data members) start with an a.
- class names start with an Uppercase letter. Function, parameter, and variable names start
- with a lowercase letter.
- for booleans, we use BOOL, TRUE and FALSE. And not other spellings that would mean the same (because they have slightly different implementations).
- pieces of code that need attention (because of "dirty" or "lazy" programming) are marked with two @-signs (@@).

### GENERAL STRUCTURE

The "MMM.EXE" source code consists of 3 main sections, each defined as a "project" in MS Visual C++:
- H245
- H245codec
- MMM

H245 and H245codec are libraries that are linked together with MMM. This is for practical reasons: the H245 message syntax (H245codec) and the message logic (H245) have been developed separately. For historical reasons, some source code refers to "Arena", an old name for the MMM application.

### GLOBAL (HELPER) CLASSES

For general purposes we have some handy classes:
EString - a "better" version of CString
IniFile - a class to read and parse the MMM configuration file
SessionLog, Log - classes to enable logging with context information, in a multi-threading program
SafeFile - a thread-safe i/o file class
TimerHandler, TimerObject - classes for timers (mainly H245 timers)

### THREADS

To encapsulate Microsoft's way of a multi-threading program, we made our own thread library. Basically a Thread is a separate piece of code that can only communicate with other Threads by using a ThreadProxy to send a Message. Each Thread has its own message queue, from which it reads messages (FIFO), while also handling timer events in between. When a Message is sent from one Thread to another, this Message can contain data as parameters. A ThreadProxy takes care of the packing and unpacking of the parameters. If the caller-Thread needs return values from the callee-Thread, the data is encapsulated in an OutputParameter.

The ThreadProxy will wait till this OutputParameter is filled, i.e. till the Message has been handled by the callee-Thread. This way we can implement a synchronous call between Threads. For different data types we need different OutputParameter classes. Currently, the following have been defined: StringArrayOutputParameter, IntegerOutputParameter, PointerOutputParameter. The program "TestThread" is an example of how threads are used. H245CODEC

The H245 coded is entirely programmed in C++, i.e. there is no ASN.1 parser or anything like that involved. The entire interface of the H245 codec software is in h245asn1.h, while the implementation is in various cpp files. In this case we broke the rule that every class should have its own .cpp file and its own .h file.

The low-level packing and unpacking of bits is done in the class BitBufferManager. On top of that, the H245 syntax is regarded as a Field containing Fields. A Field is something we can encode or decode: These 2 functionalities are in one method: "endecode". The reason for this is that most implementations for encoding and decoding are identical (consisting of calls to "endecode" of the subfields).

Some basic H245 buliding blocks are implemented as classes:
LengthDeterminant, Extension, SequenceExtension, ChoiceExtension,
BooleanField, NumberField, ConstrainedInteger, NormallySmalllnteger,
OctetString, GeneralString, IA5String,Open Field

With these building blocks we made constructions that often occur:
ChoiceField, ChoiceFieldWithoutExtension,ChoiceFieldWithExtension,
ChoicelndexField, ChoiceIndexFieldWithExtension,
SequenceFieldWithExtension, ArrayField.

All other H245 classes are defined by inheriting from the above classes. The main H245 message is a MultimediaSystemControlMessage. This is a ChoiceFieldWithExtension, where the choice is one of the following: RequestMessage, ResponseMessage, CommandMessage, IndicationMessage. These messages in turn are composed of sub-fields, literally following the H245 standard (and the mobile extensions that we need). Implementation of all these H245 messages has been quite some typing work. To keep the source code as small and simple as possible, some C macros were defined.

Sometimes we need to be able to copy a Field into another. *Only* for those classes where we needed them, we defined operator=() methods.

### H245

The logic of the H245 protocol is simulated using objects H245, H245User, and Se*** (SeBlcl, SeBlcO, SeCel, SeCeO, SeClcl, SeCicO, SeLcl, SeLcO, SeMII, SeMIO, SeMrl, SeMrO, SeMsd, SeMtl, SeMtO, SeRmel, SeRmeO, SeRtd). These objects send messages to each other, but these are in fact just synchronous function calls. The H245User class is an interface class: the implementation of its functions is in the "Session" class.

The Se*** classes all inherit from a generic class Se. This class has helper functions for tracing and encoding.

### CAPI

CAPI is a standard library for addressing ISDN cards (http://www.capi.org). The ansi C library is intended for single threaded applications on a wide range of platforms with very detailed controll on all aspects of ISDN. The CAPI classes in the H324m server are an encapsulation of the CAPI library to adapt the ansi C library to a object oriented CPP environment with multithreading support that matches the queue based multithreading architecture of the H324 Server. The library has been designed to seperate ISDN/CAPI from other possible forms of transport (like TCP, Modem, Named pipes, Shared memory).

### Session Communication

Two base classes are the core of a single ISDN session: ByteStream and ByteStreamListener. the ByteStream is an interface that implements the sending of data through the ISDN link. The ByteStreamListener must be implemented by the receiver of data and is used to indicate the reception of new data and to indicate the status of buffering for the data sending.

As ISDN is a synchrounous communication medium (it can be assynch when using the LAPB layer within the CAPI library), the transmit buffer of the ISDN Session must always be filled. When the transmit buffer is insufficiently filled, the ISDN layer will stuff random bytes in the transport. When the transmit buffer is overfilled the ISDN layer will drop the data. A session should respond to the dataRequested() method call on its ByteStreamListener interface by replying using exactly one call to sendData on the ByteStream Object.

The ByteStream class is a base class that can be extended, the Capi version is just one of the possible implementations. Currently the folowing implementations exist:
1) CapiLogicalConnectionProxy
2) InternalByteStreamThread
3) TracingConnection
4) ReplayConnection

Ad 1. CapiLogicalConnectionProxy is the normal implementation in a system using ISDN
Ad 2. InternalByteStreamThread, On a system without ISDN some simple testing is possible by internally letting the server communicate withit self. The behaviour should be identical to the server calling itself.
Ad 3. TracingConnection, For debugging purposses this class will store all the transmitted and received data in a file, while passing on the data to and from another ByteStream. One could compare this with the unix "tee" command that allows for logging data.
Ad 4, ReplayConnection, For debugging purposses this class will read the file created by a racingConnection and mimmic the behaviour of the stored session.

### Creating a Session

The previous session assumed that some sort of Session object exists that corresponds to one session implements the ByteStreamListener interface and is registered to a ByteStream using the registerListener() method. This task is implemented by the ByteStreamController and the ByteStreamConnectionListener. Each from of StreamingTransport typically implements a SessionController that creates and administrates ByteStreams for each logical connection with another Session (A server side session communicates with a client side Session).

Typically two forms of creating sessions exist:
1) One calls the other party
2) One receives a call from an other party

Ad 1) This function is executed by calling the makeConnection method on a ByteStreamController. The Controller creates the ByteStream, links it to the (physical) connection and notifies a registered ByteStreamConnectionListener of the new connection.
Ad 2) When the ByteStreamController internally receives an event that a new connection is requested (The phone is ringing), it verifies that a ByteStreamConnectionListener has been registered, creates a new ByteStream that is linked to the new (physical) connection and notifies that ByteStreamConnectionListener of the new connection.

An application must implement an object that extends ByteStreamConnectionListener. In the H324 Server this is implemented by SessionController. It proxy SessionControllerProxy is registered in the base ByteStreamController.

Currently two types of ByteStreamController exist:
1) CapiController
2) InternalByteStreamController

Ad1. This is the standard ISDN version of the ByteStreamController. It can create and receive calls. Basic support for LowerLayerBearerCapabilities is included: One can choose from 4 predefined BearerCapabilities (Speech(C), Binary data, HDLC framing(H), Binary data with H324m caps(D)) by appending the telephone number with the corresponding letter. For H324 all telephone numbers must be preceded with a D.
Ad2. For debugging purposes two ByteStreams are created that are linked as one being the server side amd the other being the client side. An example of the use of this library can be found in CapiTest.cpp and CapiTest.h.

### SESSION ETC

At first we thought we needed several threads for one connection. Later we discovered that it suffices to have only the following threads:
- CAPI
- Multiplexer
- 1 to 3 AVRecorders

Having more separate threads means more overhead. We found that the AVPlayer can run in the same thread as the Multiplexer, because reading data from a file (our current AVPlayer implementation) is not a bottle neck for the other functionality in Multiplexer thread. The logic of the Session class and the accompanied classes is depictured in the file SESSION.GIF (@@ tobedone).

Roughly the classes can be grouped as follows:
- Multiplexer (lowest level protocol)
- AdaptationLayer (higher level protocol)
- Session (highest level protocol for control; H245)
- AVRecorder (highest level protocol for incoming audio/video)
- AVPlayer (highest level protocol for outgoing audio/video)

### Multiplexer

\SessionManager\Multiplexer.h(44):class ReceivingPdu

\SessionManager\Multiplexer.h(112):class-Multiplexer:public ByteStreamListenerThread AdaptationLayer

For every connection, there is an array of outgoing AdaptationLayerOut objects, and an array of incoming AdaptationLayerln objects; one for every channel in use (up to a maximum of 6 channels). Both AdaptationLayerln and AdaptationLayerOut inherit from a generic AdaptationLayer class.

For the outgoing protocol we always define channel 0 as control channel, 2 for audio, and 3 for video. The use of the AdaptationLayerln objects is up to the terminal side. To keep an overview of the code, we defined some subclasses in the AdaptationLayerln class:
AdaptationLayerIn1Administration, AdaptationLayerIn2Administration, AdaptationLayerIn3Administration. Every AdaptationLayerOut always contains all 3 subclasses, because a channel can change its properties dynamically (in theory, a video channel can become an audio channel during a connection). These Administration classes have attributes that are specific for the Adaptation layer that is in use. Every AdaptationLayer contains a CyclicPacketBuffer. This is a thread-safe cyclic buffer. The thread-safe capabilities are currently not used (all buffer manipulations occur in the same thread). Also, this CyclicPacketBuffer is not used for incoming audio/video channels (the data is forwarded to the AVRecorders directly, without buffering). An object can subscribe itself to a CyclicPacketBuffer by inheriting from CyclicPacketBufferListener and calling initCPBufferListener(). In that case, the callback function bufferNotEmpty() is called when something is written into the CyclicPacketBuffer.

In our MMM application, we only use this on the receiving side:
a Session subecribed itself to the buffer of the incoming control AdaptationLayer (number 0). On the outgoing side, the Multiplexer directly empties the buffer after calling AVPlayer::play() that should fill it.

### Session

The Session object was made for several purposes:
- handle H245 messages;
- hang up a call (e.g. in case of an error);
- control (create/delete, start/stop) all other objects.

In a late stage in making the software, we made Session a part of the Multiplexer thread. This means some of the control has been moved to the Multiplexer thread. Especially the code for cleaning up (deleting objects etc.) has become a bit messy now. For doing its H245 tasks, a Session object contains administration objects: MsdAdministration, MtAdministration, CeAdministration, LcAdministration, BlcAdministration (the latter two are derived from CapabilitiesAdministration). The names of these objects clearly refer to the H245 protocol (MSD, MT, etc.). They are all defined in one source file pair:
SessionAdministrations.h/ SessionAdministrations.cpp.
AVRecorder and AVPlayer

From the AVRecorder and AVPlayer classes we derive classes that can handle specific audio and video protocols. We currenly have the following AVPlayers:
- SimpleAVPlayer: simply reads the bytes from a file

We currenly have the following AVRecorders:
- DebugAVRecorder: dumps bytes literally into a file
- AVRecorderForAVI: dumps bytes into a file in such a way that the file can be used by an AVI player;
- NamedPipeAVRecorder: dumps bytes into a named pipe, so a real-time player can show the video/audio on the (demo) screen. In the H245 protocol we need to tell the other side about our player capabilities. This data is stored in the class AVPlayerCapabilities. For our specific players we defined the derived classes: SimpleAVPlayerCapabilities and AmrAndMpeg4AVPlayerCapabilities.

### Main

The main MMM program is in the file ArenaMain.cpp. This file also contains some small class definitions to make the source clearer:IncomingSession, OutgoingSession, SessionController.

## Claims

1. Telecommunication system, comprising a circuit switched network (3) connected with mobile terminals (1), moreover comprising, for the transmission of streaming video content from said mobile terminals to a streaming video server (9) within the internet (5), a gateway (7), connected to the circuit switched network at the one side and connected to the internet at the other side, said gateway being fit for the conversion of streaming video bit streams received from the mobile terminals via the circuit switched network, into files having an internet compatible streaming video format, **characterized by that** the telecommunication system further comprises a registration server (8), connected with said mobile terminals (1) and fit for registering, for each relevant mobile terminal, a terminals identifier linked to the address of an internet storage location at the streaming video server wherein the internet compatible streaming video, originated by the relevant mobile terminal, is or is to be stored.

2. Telecommunication system according to claim 1, the mobile terminals (1) and the gateway (7) at said one side, being fit for exchanging video bit streams complying with a protocol for videoconferencing between mobile terminals.

3. Telecommunication system according to claim 2, said videoconferencing related protocol being the ITU H.324M protocol.

4. Telecommunication system, according to claim 1, comprising means for detecting the relevant mobile terminal's identifier and means for retrieving at the registration server (8), guided by the detected identifier, the address of the internet storage location in which the internet compatible streaming video, originated by the terminal, is to be stored, and means for forwarding said internet compatible streaming video to that internet storage location address.

5. Telecommunication system according to claim 4, said means for detecting the relevant terminal identifier, said means for retrieving at the registration server the address of the internet storage location and said means for forwarding said internet compatible streaming video to that internet storage location address being located within said gateway (7).

6. Telecommunication system according to claim 4, said means for detecting the relevant terminal identifier, said means for retrieving at the registration server the address of the internet storage location and said means for forwarding said internet compatible streaming video to that internet storage location address being located within said registration server.

7. Telecommunication system according to claim 4, said means for detecting the relevant terminal identifier, said means for retrieving at the registration server the address of the internet storage location and said means for forwarding said internet compatible streaming video to that internet storage location address being distributed over different servers.

8. Telecommunication system according to claim 4, comprising means (11) for transmitting a message to the terminal originating or having originated the streaming video content, comprising a link to the storage location of said content.

9. Telecommunication system according to claim 4, comprising means (11) for transmitting a message to one or more terminals, different from the terminals originating or having originated the streaming video content, comprising a link to the storage location of said content.

10. Telecommunication system according claim 9, comprising means (11) for transmitting, together with said message to one or more terminals, different from the content originating terminal, at least part of said streaming video content.

11. Telecommunication system according to claim 8 or 9, wherein said message is an e-mail message.

12. Telecommunication system according to claim 8 or 9, wherein said message is an SMS message.

13. Telecommunication system according to claim 8 or 9, wherein said message is an Instant Messaging message.

14. Method for, in a telecommunication system comprising a circuit switched network (3) connected with mobile terminals (1), transmitting streaming video content from said mobile terminals to a streaming video server (9) within the internet (5), the method comprising a step of converting streaming video bit streams in a format fit to be received from the mobile terminals via the circuit switched network, into files having an internet compatible streaming video format, the method being **characterized by** a step of registering at a server, for each relevant mobile terminal, a terminal identifier linked to the address of an internet storage location at the streaming video server wherein the internet compatible streaming video, originated by the relevant mobile terminal, is or is to be stored.

15. Method according to claim 14, the format of said streaming video bit streams received from the mobile terminals being fit for exchanging video bit streams complying with a protocol for videoconferencing between mobile terminals.

16. Method according to claim 15, said videoconferencing related protocol being the ITU H.324M protocol.

17. Method according to claim 14, comprising a step of detecting the relevant mobile terminal's identifier and a step of retrieving, guided by the detected identifier, the address of the internet storage location in which the internet compatible streaming video, originated by the terminal, is to be stored, and a step op forwarding said internet compatible streaming video to that internet storage location address.

## Patentansprüche

1. Telekommunikationssystem, umfassend ein leitungsvermitteltes Netz (3), das mit mobilen Endgeräten (1) verbunden ist, ferner umfassend zur Übertragung von Streaming-Video-Inhalt von mobilen Endgeräten an einen Streaming-Video-Server (9) im Internet (5) ein Gateway (7), das auf der einen Seite mit dem leitungsvermittelten Netz verbunden ist und das auf der anderen Seite mit dem Internet verbunden ist, wobei das Gateway fähig ist zur Konvertierung von Streaming-Video-Bitströmen, die von den mobilen Endgeräten über das leitüngsvermittelte Netz empfangen werden, in Dateien mit einem Internet-kompatiblen Streaming-Video-Format, **dadurch gekennzeichnet, dass** das Telekommunikationssystem ferner einen Registrierungsserver (8) umfasst, der mit den mobilen Endgeräten (1) verbunden und fähig ist, für jedes relevante mobile Endgerät eine Endgerätekennung zu registrieren, die mit der Adresse einer Internetspeicherstelle beim Streaming-Video-Server verknüpft ist, an welcher das Internet-kompatible Streaming-Video, das durch das relevante mobile Endgerät erzeugt wurde, gespeichert ist oder gespeichert werden soll.

2. Telekommunikationssystem nach Anspruch 1, wobei die mobilen Endgeräte (1) und das Gateway (7) auf der einen Seite zum Austauschen von Videobitströmen, die einem Protokoll für Videokonferenz zwischen mobilen Endgeräten entsprechen, fähig sind.

3. Telekommunikationssystem nach Anspruch 2, wobei das videokonferenzbezogene Protokoll das ITU H.324M Protokoll ist.

4. Telekommunikationssystem nach Anspruch 1, umfassend Mittel zum Erfassen der Kennung des relevanten mobilen Endgeräts, Mittel zum Abrufen beim Registrierungsserver (8), geführt durch die erfasste Kennung, der Adresse der Internetspeicherstelle, an welcher das Internet-kompatible Streaming-Video, das durch das Endgerät erzeugt wurde, gespeichert werden soll, und Mittel zum Weitersenden des Internet-kompatiblen Streaming-Videos an diese Internetspeicherstellenadresse.

5. Telekommunikationssystem nach Anspruch 4, wobei sich die Mittel zum Erfassen der relevanten Endgerätekennung, die Mittel zum Abrufen beim Registrierungsserver der Adresse der Internetspeicherstelle und die Mittel zum Weitersenden des Internet-kompatiblen Streaming-Videos an diese Internetspeicherstellenadresse innerhalb des Gateways (7) befinden.

6. Telekommunikationssystem nach Anspruch 4, wobei sich die Mittel zum Erfassen der relevanten Endgerätekennung, die Mittel zum Abrufen beim Registrierungsserver der Adresse der Internetspeicherstelle und die Mittel zum Weitersenden, des Internet-kompatiblen Streaming-Videos an diese Internetspeicherstellenadresse innerhalb des Registrierungsservers befinden.

7. melekommunikationssystem nach Anspruch 4, wobei die Mittel zum Erfassen der relevanten Endgerätekennung, die Mittel zum Abrufen beim Registrierungsserver der Adresse der Internetspeicherstelle und die Mittel zum Weitersenden des Internet-kompatiblen Streaming-Videos an diese Internetspeicherstellenadresse über verschiedene Server verteilt sind.

8. Telekommunikationssystem nach Anspruch 4, umfassend Mittel (11) zum Senden einer Meldung, die eine Verbindung mit der Speicherstelle des Inhalts umfasst, an das Endgerät, das den Streaming-Video-Inhalt erzeugt oder erzeugte.

9. Telekommunikationssystem nach Anspruch 4, umfassend Mittel (11) zum Senden einer Meldung, die eine Verbindung mit der Speicherstelle des Inhalts umfasst, an ein oder mehr andere Endgeräte als das Endgerät, das den Streaming-Video-Inhalt erzeugt oder erzeugte.

10. Telekommunikationssystem nach Anspruch 9, umfassend Mittel (11) zum Senden zusammen mit der Meldung wenigstens einen Teil des Streaming-Video-Inhalts an ein oder mehr andere Endgeräte als das inhalterzeugende Endgerät.

11. Telekommunikationssystem nach Anspruch 8 oder 9, wobei die Meldung eine E-Mail-Meldung ist.

12. Telekommunikationssystem nach Anspruch 8 oder 9, wobei die Meldung eine SMS-Meldung ist.

13. Telekommunikationssystem nach Anspruch 8 oder 9, wobei die Meldung eine Sofortmeldungsübermittlungs-Meldung ist.

14. Verfahren zum Übertragen von Streaming-Video-Inhalt in einem Telekommunikationssystem, das ein leitungsvermitteltes Netz (3) umfasst, das mit mobilen Endgeräten (1) verbunden ist, von den mobilen Endgeräten an einen Streaming-Video-Server (9) im Internet (5), wobei das Verfahren einen Schritt des Konvertierens von Streaming-Video-Bitströmen in einem Format, das geeignet ist, von den mobilen Endgeräten über das leitungsvermittelte Netz empfangen zu werden, in Dateien mit einem Internet-kompatiblen Streaming-Video-Format umfasst, wobei das Verfahren **dadurch gekennzeichnet ist, dass** es einen Schritt des Registrierens bei einem Server für jedes relevante mobile Endgerät einer Endgerätekennung umfasst, die mit der Adresse einer Internetspeicherstelle beim Streaming-Video-Server verknüpft ist, an welcher das Internet-kompatible Streaming-Video, das durch das relevante mobile Endgerät erzeugt wurde, gespeichert ist oder gespeichert werden soll.

15. Verfahren nach Anspruch 14, wobei das Format der Streaming-Video-Bitströme, die von den mobilen Endgeräten empfangen werden, zum Austauschen von Videobitströmen geeignet ist, die einem Protokoll für Videokonferenz zwischen mobilen Endgeräten entsprechen.

16. Verfahren nach Anspruch 15, wobei das videokonferenzbezogene Protokoll das ITU H.324M Protokoll ist.

17. Verfahren nach Anspruch 14, umfassend die folgenden Schritte: Erfassen der Kennung des relevanten mobilen Endgeräts, Abrufen, geführt von der erfassten Kennung, der Adresse der Internetspeicherstelle, an welcher das Internet-kompatible Streaming-Video, das durch das Endgerät erzeugt wurde, gespeichert werden soll, und Weitersenden des Internet-kompatiblen Streaming-Videos an diese Internetspeicherstellenadresse.

## Revendications

1. Système de télécommunication, comprenant un réseau (3) à commutation de circuit connecté à des terminaux mobiles (1) et de plus comprenant, pour la transmission d'un contenu de signaux vidéo à partir desdits terminaux mobiles vers un serveur de signal vidéo (9) sur Internet (5), une passerelle (7) connectée au réseau à commutation de circuit sur un côté et connectée à Internet de l'autre côté, ladite passerelle étant adaptée à la conversion de flux binaires de signaux vidéo reçus depuis les terminaux mobiles via le réseau à commutation de circuit, en fichiers ayant un format de signaux vidéo compatible Internet, **caractérisé en ce que**, le système de télécommunication comprend en outre un serveur d'enregistrement (8), connecté avec lesdits terminaux mobiles (1) et adapté pour enregistrer, pour chaque terminal mobile approprié, un identifiant de terminal relié à l'adresse d'un emplacement de stockage Internet au niveau du serveur de signal vidéo dans lequel les signaux vidéo compatibles Internet, émis par le terminal mobile approprié, sont ou vont être stockés.

2. Système de télécommunication selon la revendication 1, les terminaux mobiles (1) et la passerelle (7) au niveau dudit côté, étant adaptés pour échanger des flux binaires vidéo respectant un protocole de vidéoconférence entre des terminaux mobiles.

3. Système de télécommunication selon la revendication 2, ledit protocole se rapportant à la vidéoconférence étant le protocole ITU H.324M.

4. Système de télécommunication selon la revendication 1, comprenant des moyens pour détecter l'identifiant de terminal mobile approprié et des moyens pour récupérer du serveur d'enregistrement (8), guidés par l'identifiant détecté, l'adresse de l'emplacement de stockage Internet où le signal vidéo compatible Internet, émis par le terminal doit être stocké, et des moyens pour transférer ledit signal vidéo compatible Internet vers cette adresse d'emplacement de stockage Internet.

5. Système de télécommunication selon la revendication 4, lesdits moyens pour détecter l'identifiant de terminal approprié, lesdits moyens pour récupérer du serveur d'enregistrement l'adresse de l'emplacement de stockage Internet et lesdits moyens pour transférer ledit signal vidéo compatible Internet vers cette adresse d'emplacement de stockage Internet étant situés dans ladite passerelle (7).

6. Système de télécommunication selon la revendication 4, lesdits moyens pour détecter l'identifiant de terminal approprié, lesdits moyens pour récupérer du serveur d'enregistrement l'adresse de l'emplacement de stockage Internet et lesdits moyens pour transférer ledit signal vidéo compatible Internet vers cette adresse d'emplacement de stockage Internet étant situés dans ledit serveur d' enregistrement.

7. Système de télécommunication selon la revendication 4, lesdits moyens pour détecter l'identifiant de terminal approprié, lesdits moyens pour récupérer du serveur d'enregistrement l'adresse de l'emplacement de stockage Internet et lesdits moyens pour transférer ledit signal vidéo compatible Internet vers cette adresse d'emplacement de stockage Internet étant répartis sur différents serveurs.

8. Système de télécommunication selon la revendication 4, comprenant des moyens (11) pour transmettre un message au terminal, émettant ou ayant émis le contenu du signal vidéo, comprenant un lien vers l'emplacement de stockage dudit contenu.

9. Système de télécommunication selon la revendication 4, comprenant des moyens (11) pour transmettre un message à un ou plusieurs terminaux, différents du terminal émettant ou ayant émis le contenu du signal vidéo, comprenant un lien vers l'emplacement de stockage dudit contenu.

10. Système de télécommunication selon la revendication 9, comprenant des moyens (11) pour transmettre, en même temps que ledit message à un ou plusieurs terminaux différents du terminal émettant le contenu, au moins une partie du contenu dudit signal vidéo.

11. Système de télécommunication selon les revendications 8 ou 9, dans lequel ledit message est un message e-mail.

12. Système de télécommunication selon les revendications 8 ou 9, dans lequel ledit message est un message SMS.

13. Système de télécommunication selon les revendications 8 ou 9, dans lequel ledit message est un message instantané.

14. Procédé pour, dans un système de télécommunications comprenant un réseau à commutation de circuit (3) connecté à des terminaux mobiles (1), transmettre un contenu de signal vidéo à partir desdits terminaux mobiles vers un serveur de signal vidéo (9) sur Internet (5), le procédé comprenant une étape de conversion de flux binaires de signaux vidéo dans un format adapté pour être reçu par les terminaux mobiles via le réseau à commutation de circuit, en fichiers ayant un format de signal vidéo compatible Internet, le procédé étant **caractérisé par** une étape d'enregistrement au niveau d'un serveur pour chaque terminal mobile approprié, d'un identifiant de terminal relié à l'adresse d'un emplacement de stockage Internet au serveur de signal vidéo, dans lequel les signaux vidéo compatibles Internet, émis par le terminal mobile approprié, sont ou vont être stockés.

15. Procédé selon la revendication 14, le format desdits flux binaires de signaux vidéo reçus depuis les terminaux mobiles étant adapté pour échanger des flux binaires vidéo en respectant un protocole de vidéoconférence entre des terminaux mobiles.

16. Procédé selon la revendication 15, ledit protocole se rapportant à la vidéoconférence étant le protocole ITU H.324M.

17. Procédé selon la revendication 14, comprenant une étape de détection de l'identifiant du terminal mobile approprié et une étape de récupération, guidée par l'identifiant détecté, de l'adresse de l'emplacement de stockage Internet dans lequel le signal vidéo compatible Internet, émis vers le terminal, va être stocké, et une étape pour transférer ledit signal vidéo compatible Internet vers cette adresse d'emplacement de stockage Internet.
